# EUROPEAN PATENT SPECIFICATION

(11) **EP 2 343 667 B1**
(45) Date of publication and mention of the grant of the patent: **23.04.2014**
(21) Application number: 09828553.9
(22) Date of filing: 20.05.2009
(51) Int. Cl.: G06F 21/57, H04L 29/06, H04W 12/10, H04L 29/00, H04W 88/08

(54) **Method, wireless access device and network device for platform integrity authentication**
Verfahren, drahtlose Zugangseinrichtung und Netzwerkeinrichtung zur Authentifikation von Platformintegrität
Procédé, dispositif d'accès sans fil et dispositif de réseau pour authentification d'intégrité de plateforme

(30) Priority: 03.11.2008 CN 200810225850
(43) Date of publication of application: 13.07.2011
(73) Proprietor: Huawei Technologies Co., Ltd., Longgang District, Shenzhen Guangdong 518129 (CN)
(72) Inventor: ZHANG, Ning, Longgang District 518129 Shenzen (CN); WANG, Shaobin, Longgang District 518129 Shenzen (CN); DING, Xiaoyan, Longgang District 518129 Shenzen (CN); WEI, Jiwei, Longgang District 518129 Shenzen (CN)
(74) Representative: Isarpatent
(86) International application number: PCT/CN2009/071879
(87) International publication number: WO 2010/060292

(56) References cited:
- EP-A2- 1 980 970
- WO-A2-2008/024135
- CN-A- 1 694 452
- CN-A- 1 703 004
- CN-A- 101 241 528
- US-A1- 2005 033 987

## Description

### FIELD OF THE INVENTION

The present invention relates to the communication technology field, and in particular, to a method and system of platform integrity verification, a wireless access device, and a network device.

### BACKGROUND

With the development of the telecommunication technology, various radio access technologies are developed rapidly. For example, the Femtocell technology is a new technology that is promoted for homes and small and medium-sized enterprises to fast solve the indoor coverage problems at low prices. The Femtocell is also called Home (e) Node B (H(e)NB). In the 3rd Generation Partnership Project (3GPP), the Femtocell is called H(e)NB. Femtocell is a low-cost and low-power cellular NodeB that implements the communication between an Internet Protocol (IP) network and a mobile network over existing wideband circuits or the specific Security Gateway (SeGW) remotely.

When a user applies to an operator for a service, the operator delivers an H(e)NB to the user for installation and use on his own. In this case, the H(e)NB is exposed to a network beyond the control of the operator. To protect the H(e)NB from attacks of external software and hardware, the operator needs to maintain a trustful environment in the H(e)NB. The trustful environment has the security storage and security calculation functions to store the sensitive data, start the H(e)NB securely, measure the platform parts, such as the device Operating System (OS) and application program, that affect the platform integrity (trustable state), store a metric in a storage unit in the trustful environment, and present a measurement result to an external entity faithfully, such as the operator's network to which the H(e)NB is connected, so that the core network can verify the integrity of the H(e)NB platform.

The operator, however, needs to manage and maintain an H(e)NB. During the maintenance, the operator may update the H(e)NB software remotely. In this case, the platform integrity parameters are changed. That is, the trustful environment is updated. The downloaded and updated flow of the software needs to be extended, so that the H(e)NB can be still started securely, and the operator can still verify the platform integrity after the update.

At present, the H(e)NB software is updated remotely as follows: the software between an H(e)NB and an H(e)NB management server is updated over the Security Socket Layer (SSL) and Transport Layer Security (TLS) protocols. The IDs of the H(e)NB and the H(e)NB management server can be authenticated by each other by configuring a client certificate on the H(e)NB side and configuring a server certificate on the H(e)NB management server side to ensure confidentiality and integrity of a transmission channel and guarantee the sources of software.

The preceding technical solution has the following disadvantages: The H(e)NB management server can neither acquire the status of the updated H(e)NB software nor verify the platform integrity after the update.

US 2005/0033987 A1 discloses a system and a method to establish and maintain conditional trust by stating signal of distrust. EP 1 980 970 A2 discloses a dynamic trust management.

### SUMMARY

A method and system of platform integrity verification, a wireless access device, and a network device are provided herein to verify the platform integrity after .the wireless access device is updated.

A method of platform integrity verification is provided in an embodiment of the present invention. The method includes:
calculating, by a network side, the platform integrity Reference Integrity Metric (RIM) after the wireless access device is updated according to parameter information;
sending, by the network side, the parameter information to the wireless access device;
receiving, by the network side, the new platform integrity metric that is obtained according to the parameter information from the wireless access device; and
comparing, by the network side, the platform integrity RIM that is obtained after the wireless access device is updated according to the parameter information with the new platform integrity metric to determine the integrity status of the platform after the update.

The method of platform integrity verification provided in an embodiment of the present invention is adapted to obtain a platform integrity RIM and a new platform integrity metric on the network side by extending a verification flow to verify the platform integrity of an updated wireless access device.

A method of platform integrity verification is provided in an embodiment of the present invention. The method includes:
receiving, by a wireless access device, the parameter information from a network side;
performing updating, by the wireless access device, according to the parameter information, and remeasuring the platform integrity after the updating to obtain a new platform integrity metric; and
sending the new platform integrity metric to the network side, so that the network side verifies the platform integrity by comparing a platform integrity metric, which is expected to achieve after the updating and calculated according to the parameter information, with the new platform integrity metric to determine whether the updating is successful.

The method of platform integrity verification provided in an embodiment of the present invention is adapted to obtain a new platform integrity metric on the network side by extending a verification flow, so that a network device prepares for the platform integrity verification.

A network device is provided in an embodiment of the present invention. The network device includes:
a calculating unit, adapted to calculate the platform integrity RIM after a wireless access device is updated according to parameter information;
a sending unit, adapted to send the parameter information to the wireless access device;
a receiving unit, adapted to receive the new platform integrity metric that is obtained according to the parameter information from the wireless access device; and
a verifying unit, adapted to compare the platform integrity RIM that is obtained after the wireless access device is updated according to the parameter information with the new platform integrity metric to determine the integrity status of the platform after the update.

The network device provided in an embodiment of the present invention is adapted to verify the platform integrity after the wireless access device is updated after the calculating unit obtains the platform integrity RIM after the update, the receiving unit obtains the new platform integrity metric, and the verifying unit compares the preceding information.

A wireless access device is provided in an embodiment of the present invention. The wireless access device includes:
a receiving unit, adapted to receive the parameter information from a network side;
an obtaining unit, adapted to perform updating according to the parameter information, and remeasure platform integrity after the updating to obtain a new platform integrity metric; and
a sending unit, adapted to send the new platform integrity metric to the network side so that the network side verifies the platform integrity by comparing a platform integrity metric, which is expected to achieve after the updating and calculated according to the parameter information, with the new platform integrity metric to determine whether the updating is successful.

In the embodiment of the present invention, the obtaining unit of the wireless access device obtains a new platform integrity metric, and the receiving unit sends the new platform integrity metric to the network, so that the network side is ready for platform integrity verification.

A platform integrity verification system is provided in an embodiment of the present invention. The system includes:
a network device, adapted to: calculate a platform integrity Reference Integrity Metric (RIM) after a wireless access device is updated according to parameter information; send the parameter information to the wireless access device; receive a new platform integrity metric obtained according to the parameter information from the wireless access device; and compare the platform integrity RIM obtained after the wireless access device is updated according to the parameter information with the new platform integrity metric to determine the integrity status of the platform after the update; and
a wireless access device, adapted to: receive the parameter information from the network device; perform the updating according to the parameter information, and remeasure the platform integrity after the updating to obtain the new platform integrity metric; and send the new platform integrity metric to the network device.

The platform integrity verification system provided in an embodiment of the present invention enables the management server to obtain a platform integrity RIM and a new platform integrity metric by extending a verification flow between a network device and a wireless access device, thus verifying the platform integrity after the wireless access device is updated.

### BRIEF DESCRIPTION OF THE DRAWINGS

To explicitly explain the technical solution of the present invention, the figures are described as follows. Obviously, the following figures are embodiments of the present invention.
FIG. 1 is a flowchart of a method of platform integrity verification provided in embodiment 1 of the present invention;
FIG. 2 is a flowchart of a method of platform integrity verification provided in embodiment 2 of the present invention;
FIG. 3 is a signaling flowchart of a method of platform integrity verification provided in an embodiment of the present invention;
FIG. 4 is a flowchart of a method of platform integrity verification provided in embodiment 3 of the present invention;
FIG. 5 is a flowchart of a method of platform integrity verification provided in embodiment 4 of the present invention;
FIG. 6 shows a structure of a network device in an embodiment of the present invention;
FIG. 7 shows a structure of a wireless access device in an embodiment of the present invention; and
FIG. 8 shows a structure of a platform integrity verification system in an embodiment of the present invention.

### DETAILED DESCRIPTION

The following section explicitly describes the complete technical solution provided in the embodiments of the present invention. Obviously, only parts of the embodiments of the present invention are involved herein.

The types of networks in an embodiment of the present invention include: GSM network, CDMA network, WCDMA network, WiMAX network, TD-SCDMA network, and LTE network. The types of wireless access devices include: NodeB (such as H(e)NB, Pico, UMTS wireless access device, WiMAX Femto NodeB, and WiMAX macro NodeB), base station controller, and other access devices.

A network device on the network side in an embodiment of the present invention includes a network server.

The technical solution in an embodiment of the present invention is further described by referring to the figures and specific embodiments.

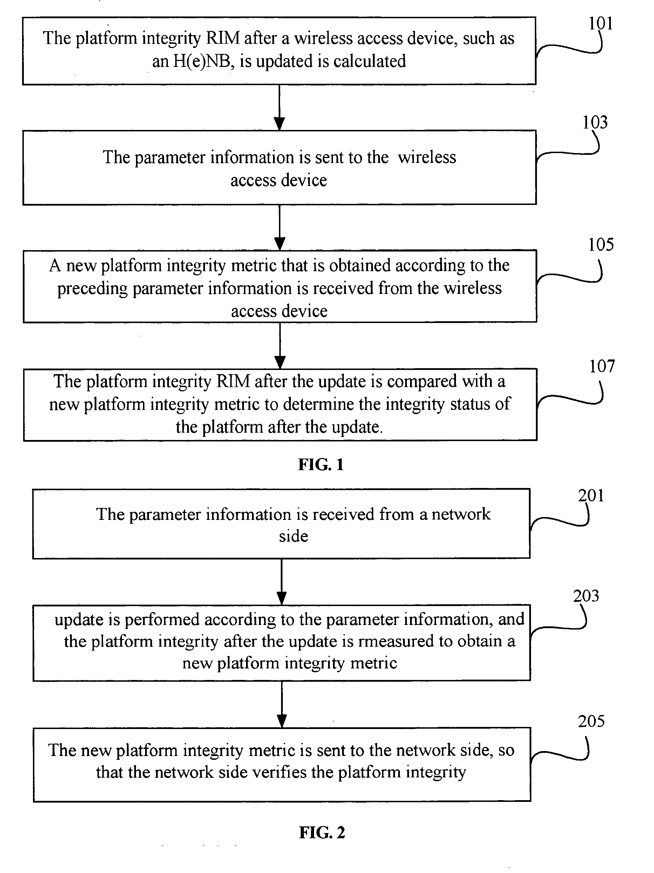

FIG. 1 is a flowchart of a method of platform integrity verification provided in embodiment 1 of the present invention. The method includes:
Step 101: The platform integrity RIM after a wireless access device, such as an H(e)NB, is updated is calculated.

At this step, the platform integrity RIM after the wireless access device is updated can be calculated according to a platform integrity RIM and the parameter information on the network side, especially on a management server or other devices. The parameter information includes the software information and configuration information. The calculating platform integrity RIM after the update according to a platform integrity RIM and the parameter information includes: calculating the platform integrity RIM after the software is updated according to a platform integrity RIM and an integrity RIM related to the software contained in the software information; or, calculating a platform integrity RIM after updating the configuration information according to a platform integrity RIM and the configuration information. The RIM refers to an expected reference metric that is adapted to measure the software or hardware, and check the measurement result before the software or hardware is loaded or when initialization is prepared for software running to ensure the trustful status of a platform during the running of the system. A typical RIM is a summary of the software or configuration data that impacts the trustful status of a platform.

Step 103: The parameter information is sent to the wireless access device.

At this step, the parameter information is sent from a network, especially a management server or other devices, to the wireless access device.

Step 105: A new platform integrity metric that is obtained according to the preceding parameter information is received from the wireless access device.

In the network environment, the programs run on a device are usually attacked by hackers who, for example, alter the code of a semantically or behaviorally correct or unmalicious software into an incorrect or a malicious version, thus bringing hidden security threats to the device or the network to which the device is connected. To avoid a device platform from being tampered or enable the platform to detect such tampering, the integrity of the platform must be protected. By measuring the programs running on a platform, the platform can be verified as integral without being tampered maliciously.

At this step, a new platform integrity metric from the wireless access device can be received by a network, especially a management server or other devices. The new platform integrity metric is obtained after the software on the wireless access device is updated according to the preceding software information. The metric is also called Target Integrity Metric (TIM), which refers to an actual metric that is obtained after the integrity of a target object or component is measured by an agent. A typical TIM is a hash value that is adapted to measure an executable code and related configuration data of the object software.

Step 107: The platform integrity RIM after the update is compared with a new platform integrity metric to determine the integrity status of the platform after the update.

To verify the platform integrity, a network, especially a management server, needs to obtain the platform integrity RIM after the update and the new platform integrity metric in a flexible order, which can be the order of step 101, step 103, and step 105, or the order of step 103, step 105, and step 101.

In this embodiment where the method of platform integrity verification is provided, the verification flow is extended, so that a network, especially a management server, can obtain the platform integrity RIM and a new platform integrity metric to verify the platform integrity after the wireless access device is updated.

FIG. 2 is a flowchart of a method of platform integrity verification provided in embodiment 2 of the present invention. The method includes:
Step 201: The parameter information is received from a network side.

At this step, a wireless access device, such as an H(e)NB, receives the parameter information from the network side. The parameter information includes the software information and configuration information. The software information includes the information about the software to be updated and the RIM related to the software. The configuration information includes the configuration data to be updated and the integrity RIM related to the configuration data. Of course, the wireless access device can also be a terminal with the trustful environment, customer premises device and wireless access device, but not limited to the preceding devices.

Step 203: Update is performed according to the parameter information and the platform integrity after the update is remeasured to obtain a new platform integrity metric.

At this step, especially when the parameter information received by the wireless access device is the software information, the software is updated according to the software information, and the platform integrity after the update is remeasured to obtain a new platform integrity metric.

When the parameter information received by the wireless access device is the configuration information, the configuration is updated according to configuration information, and the platform integrity after the update is remeasured to obtain a new platform integrity metric.

Step 205: The new platform integrity metric is sent to the network side, so that the network side verifies the platform integrity.

At this step, especially when the wireless access device sends the new platform integrity metric that is obtained in previous step to the network side, the network side can verify platform integrity according to metric information.

In this embodiment where the method of platform integrity verification is provided, a verification flow is expanded to provide a new platform integrity metric to the network, so that a network device prepares for the platform integrity verification after the wireless access device is updated.

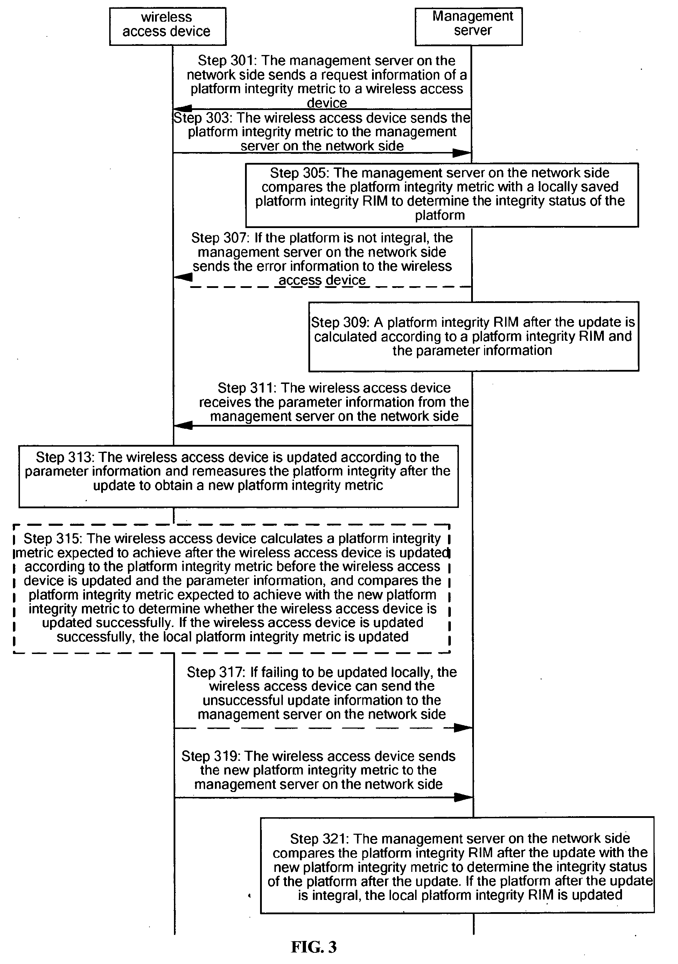

FIG. 3 is a signaling flowchart of a method of platform integrity verification provided in an embodiment of the present invention. The method includes:
Step 301: A management server on the network side sends a request information of a platform integrity metric to a wireless access device.
Step 303: The wireless access device sends the platform integrity metric to the management server on the network side.
Step 305: The management server on the network side compares the platform integrity metric with a locally saved platform integrity RIM to determine the integrity status of the platform.

In step 301, step 303, and step 305, the platform integrity before the wireless access device is updated is checked.

Step 307: If the platform status is not integral, the management server on the network side sends the error information to the wireless access device.

This step is not performed unless the platform is not integral.

Step 309: A platform integrity RIM after the update is calculated according to a platform integrity RIM and the parameter information.

The parameter information includes the software information and/or configuration information. The step 309 may include the following:
calculating platform integrity RIM after the software is updated according to a platform integrity RIM and an integrity RIM related to the software that is contained in the software information; and/or,
calculating platform integrity RIM after the configuration information is updated according to a platform integrity RIM and modified configuration data that is contained in the configuration information.
Step 311: The wireless access device receives the parameter information from the management server on the network side.
Step 313: The wireless access device is updated according to the parameter information and remeasures the platform integrity after the update to obtain a new platform integrity metric.

When the parameter information is the software information, the wireless access device can update the software according to the software information and remeasure the platform integrity after the update to obtain a new platform integrity metric. When the parameter information is the configuration information, the wireless access device can update the configuration according to the configuration information and remeasure the platform integrity after the update to obtain a new platform integrity metric. Moreover, before updating the software according to the software information, the wireless access device may also perform the following operations: verifying whether a source of the software to be updated is legal, and updating the software when the source is legal.

Step 315: The wireless access device calculates a platform integrity metric expected to achieve after the wireless access device is updated according to the platform integrity metric before the wireless access device is updated and the parameter information, and compares the platform integrity metric expected to achieve with the new platform integrity metric to determine whether the wireless access device is updated successfully. If the wireless access device is updated successfully, the local platform integrity metric is updated.

The wireless access device calculates a platform integrity metric expected to achieve after the wireless access device is updated according to the platform integrity metric before the wireless access device is updated and the parameter information as follows: When the parameter information is the software information, the wireless access device may calculate a platform integrity RIM after the software is updated according to a platform integrity RIM and an integrity RIM related to the software that is contained in the software information. When the parameter information is the configuration information, the wireless access device calculates a platform integrity RIM after the configuration information is updated according to a platform integrity RIM and an integrity RIM related to the configuration data that is contained in the configuration information.

Step 317: If failing to be updated locally, the wireless access device can send the unsuccessful update information to the management server on the network side.

At step 315 and step 317, the wireless access device performs the local checking process, which can be omitted as required. Instead, the subsequent steps can be performed directly.

Step 319: The wireless access device sends the new platform integrity metric to the management server on the network side.

Step 321: The management server on the network side compares the platform integrity RIM that is obtained after the wireless access device is updated with the new platform integrity metric to determine the integrity status of the platform after the update. If the platform status after the update is integral, the local platform integrity RIM is updated.

In this embodiment where a method of platform integrity verification is provided, a wireless access device is interacted with a management server to verify the platform integrity of the wireless access device before and after the wireless access device is updated and to save the platform integrity RIM after successful updating on the network side. In this case, the integrity parameters after the update are maintained on the network side.

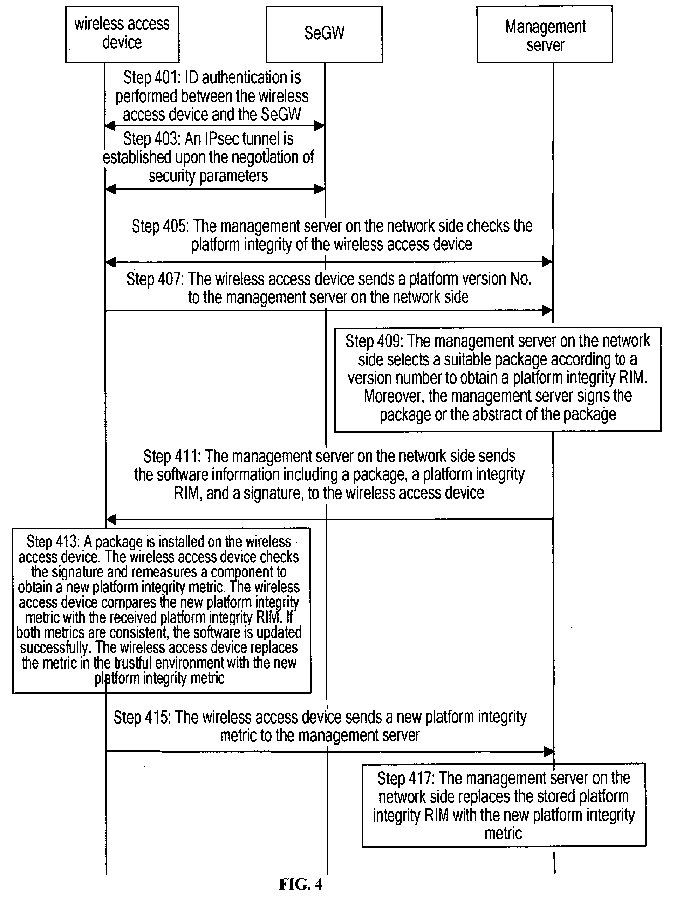

FIG. 4 is a flowchart of a method of platform integrity verification provided in embodiment 3 of the present invention. In this embodiment, an IP Security Protocol (IPSec) tunnel is established between a wireless access device, such as an H(e)NB, and a management server on the network side through a security EMS to ensure secure transmission. The method includes:
Step 401: ID authentication is performed between a wireless access device and an SeGW. Step 403: Security parameters are negotiated between the wireless access device and the SeGW to establish an IPsec tunnel.

In step 401 and step 403, the messages transmitted between the wireless access device and the SeGW are plain texts. Because the IPsec tunnel is established, the messages are exchanged between the wireless access device and the SeGW over the IPsec tunnel.

Step 405: The management server on the network side verifies the platform integrity of the wireless access device.

The wireless access device sends the measurement result stored in a storage unit in the trustful environment to the management server. The wireless access device signs the data with a signature key in the trustful environment to guarantee the validation of the data. The management server compares the RIM that is saved locally with the metric that is provided to the management server in the wireless access device trustful environment for verifying the platform integrity of the wireless access device.

Step 407: The wireless access device sends a platform version No. to the management server on the network side.

After receiving the version No., the management server confirms the version.

Step 409: The management server on the network side selects a suitable package according to a version number to obtain a platform integrity RIM. Moreover, the management server signs the package or the abstract of the package.

Signing the package or the abstract of the package ensures that the wireless access device can verify whether the source of the package is legal according to a public key.

Step 411: The management server on the network side sends the software information including a package, a platform integrity RIM, and a signature to the wireless access device.

The platform integrity RIM can be calculated by the management server or provided by a software provider.

Step 413: A package is installed on the wireless access device. The wireless access device checks the signature and remeasures a component to obtain a new platform integrity metric. The wireless access device compares the new platform integrity metric with the received platform integrity RIM. If both metrics are consistent, the software is updated successfully. The wireless access device replaces the metric in the trustful environment with the new platform integrity metric.

Step 415: The wireless access device sends a new platform integrity metric to the management server.

Step 417: The management server on the network side replaces the stored platform integrity RIM with the new platform integrity metric.

In this embodiment where a method of platform integrity verification is provided, a package or the abstract of the package is signed to guarantee the legality of the software sources. In addition, the wireless access device is interacted with the management server on the network side to verify the platform integrity after the software is updated and to save the platform integrity RIM after successful updating on the network side, thus maintaining the integrity parameters on the network.

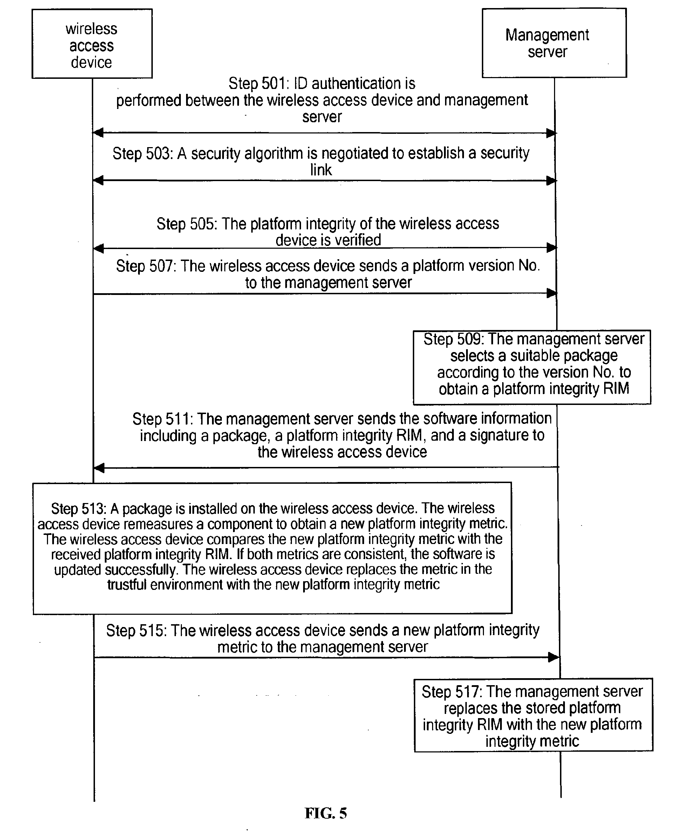

FIG. 5 is a flowchart of a method of platform integrity verification provided in embodiment 4 of the present invention. In this embodiment, the transmission security between a wireless access device, such as an H(e)NB, and a management server is guaranteed through a security protocol. The method includes:
Step 501: ID authentication is performed between a wireless access device and a management server.
Step 503: A security algorithm is negotiated by the wireless access device and the management server to establish a security link.

In step 501 and step 503, the messages transmitted between the wireless access device and the management server are plain texts. Because the security link is established, the messages are exchanged between the wireless access device and the management server over the security link.

Step 505: The management server verifies the platform integrity of a wireless access device.

At this step, the wireless access device sends the measurement result stored in a storage unit in the trustful environment to the management server. The wireless access device signs the data with a signature key in the trustful environment to guarantee the validation of the data. The management server compares the RIM that is saved locally with the metric that is provided to the management server in the wireless access device trustful environment for verifying the platform integrity of the wireless access device.

Step 507: The wireless access device sends a platform version No. to the management server.

After receiving the version No., the management server confirms the version.

Step 509: The management server selects a suitable package according to the version No. to obtain a platform integrity RIM.

Step 511: The management server sends the software information including a package, a platform integrity RIM, and a signature to the wireless access device.

The platform integrity RIM can be calculated by the management server or provided by a software provider.

Step 513: A package is installed on the wireless access device. The wireless access device remeasures a component to obtain a new platform integrity metric. The wireless access device compares the new platform integrity metric with the received platform integrity RIM. If both metrics are consistent, the software is updated successfully. The wireless access device replaces the metric in the trustful environment with the new platform integrity metric.

Step 515: The wireless access device sends a new platform integrity metric to the management server.

Step 517: The management server replaces the stored platform integrity RIM with the new platform integrity metric.

In this embodiment where a method of platform integrity verification is provided, the wireless access device is interacted with the network to verify the platform integrity after the software is updated and to save the platform integrity RIM after successful updating on the network, thus maintaining the integrity parameters on the network.

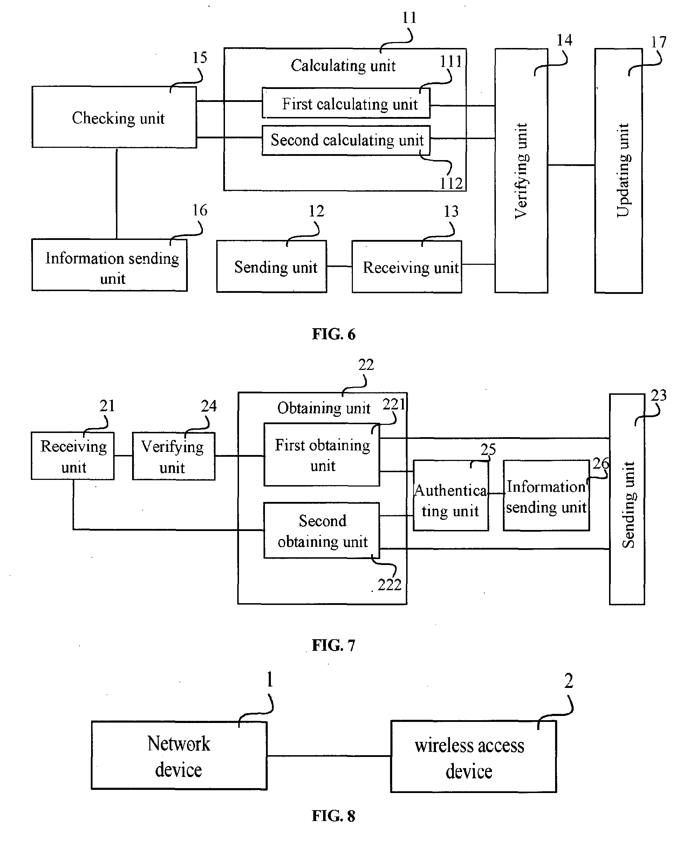

FIG. 6 shows a structure of a network device in an embodiment of the present invention.

The network device may be a management server or other devices. The network device includes:
a calculating unit 11, adapted to calculate the platform integrity RIM after a wireless access device, such as an H(e)NB, is updated;
a sending unit 12, adapted to send the parameter information to the wireless access device;
a receiving unit 13, adapted to receive a new platform integrity metric that is obtained according to the parameter information from the wireless access device; and
a verifying unit 14, adapted to compare the platform integrity RIM that is obtained after the wireless access device is updated with the new platform integrity metric to determine the integrity status of the platform after the wireless access device is updated.

For checking the platform integrity before the wireless access device is updated, the network device also includes:
a checking unit 15, adapted to:
   send the information about requesting a platform integrity metric to the wireless access device;
   receive a platform integrity metric from the wireless access device;
   compare the platform integrity metric with a locally saved platform RIM to determine the integrity of the platform; and
   send information to the calculating unit 11 if the platform status is integral.

The management server also includes:
an information sending unit 16, adapted to send the error information to the wireless access device is the platform is not integral.

Moreover, for maintaining the network data after the wireless access device is updated, the network device also includes:
an updating unit 17, adapted to update the local platform RIM when the platform status is integral after the verifying unit 14 is updated.

Furthermore, the calculating unit 11 is adapted to calculate both the platform integrity RIM after the software is updated and the platform integrity RIM after the configuration information is updated. The calculating unit includes:
a first calculating unit 111, adapted to: receive the information from the check unit;
   calculate the platform integrity RIM after the software is updated according to a platform integrity RIM and an integrity RIM related to the software that is contained in the software information after receiving information from the check unit; and send the platform integrity RIM after the software is updated to the verifying unit 14; and
a second calculation unit 112, adapted to: receive the information from the check unit; calculate the platform integrity RIM after the configuration information is updated according to a platform integrity RIM and a new integrity RIM related to the configuration data that is contained in the configuration information after receiving information from the check unit; and send the platform integrity RIM after the configuration information is updated to the verifying unit 14.

In this embodiment where the network device is provided, the platform integrity is verified after the calculating unit obtains the platform integrity RIM after the update, the receiving unit obtains the new platform integrity metric, and the verifying unit compares the preceding information.

FIG. 7 shows a structure of a wireless access device provided in an embodiment of the present invention. The wireless access device, such as an H(e)NB, includes:
a receiving unit 21, adapted to receive the parameter information from a management server;
an obtaining unit 22, adapted to perform updating according to the parameter information, and remeasure platform integrity after the updating to obtain a new platform integrity metric; and
a sending unit 23, adapted to send the new platform integrity metric to the management server, so that the management server verifies the platform integrity.

The parameter information includes the software information and/or configuration information. Therefore, the obtaining unit 22 includes:
a first obtaining unit 221, adapted to update software according to the software information and remeasure the platform integrity after the updating to obtain a new platform integrity metric; and
a second obtaining unit 222, adapted to update the configuration according to the configuration data in the configuration information and remeasure the platform integrity after the updating to obtain a new platform integrity metric.

Moreover, for verifying the legality of the software source, the wireless access device also includes:
a verifying unit 24, adapted to verify whether the source of the software to be updated that is received by the receiving unit 21 is legal according to the signed package or abstract of the package that is contained in the software information and send the software information to the first obtaining unit 221 if the source is legal.

Furthermore, the wireless access device can also perform local check. Therefore, the wireless access device also includes:
an authenticating unit 25, adapted to: calculate a platform integrity metric expected to achieve after the software is updated according to a platform integrity metric before the update and the parameter information; and compare the platform integrity metric expected to achieve with a new platform integrity metric that is obtained by the obtaining unit 22 to determine whether the wireless access device is updated successfully; and
an information sending unit 26, adapted to send the update failure information to the management server if the wireless access device is updated unsuccessfully.

In this embodiment where the wireless access device is provided, the platform integrity verification is prepared for the management server after the obtaining unit obtains a new platform integrity metric, and the sending unit sends the new platform integrity metric to the management server.

FIG. 8 shows a structure of a platform integrity verification system in an embodiment of the present invention. The system includes:
a network device 1, such as a management server, adapted to: calculate a platform integrity RIM after a wireless access device is updated; send the parameter information to the wireless access device; receive a new platform integrity metric that is obtained from the wireless access device according to the parameter information; and compare the platform integrity RIM after the wireless access device is updated with the new platform integrity metric to determine the integrity status of the platform after the update; and
a wireless access device 2, such as an H(e)NB, adapted to: receive the parameter information from the network device; update the wireless access device according to parameter information; remeasure the platform integrity after the update to obtain a new platform integrity metric; and send the new platform integrity metric to the network device.

The parameter information includes the software information and/or configuration information. The network device sends the parameter information including the software information and/or configuration information to the wireless access device, so that the wireless access device calculates a new platform integrity metric according to the parameter information. After calculating the metric, the wireless access device sends the metric to the network device, so that the network device can verify the platform integrity according to the metric and a locally saved platform integrity RIM after the wireless access device is updated. Moreover, the wireless access device can perform local check after calculating a new platform integrity metric.

In this embodiment of the present invention where a platform integrity verification system is provided, the platform integrity of an updated wireless access device can be verified after the management device obtains a platform integrity RIM and a new platform integrity metric by extending a verification flow between a network device and a wireless access device.

The foregoing implementation description makes it clear to those skilled in the art that the embodiment in the present invention can be implemented either by hardware or by software on a necessary universal hardware platform. This means the technical solution provided by the embodiment in the present invention can be implemented by a software product. The storage mediums of the software product may be a CD-ROM, USB disk, mobile hard disk, or another non-volatile medium. The software product includes several commands to direct a computer (a PC, server, or network device) to execute the methods provided by the embodiments of the present invention.

At last, note that the preceding embodiments are only adapted to describe the technical solutions in the present invention and not adapted to limit the technical solutions. Although the present invention is described in detail by referring to the preceding embodiments, those skilled in the art should understand that technical solutions in the present invention can still be modified or some technical features can be replaced.

## Claims

1. A method of platform integrity verification, comprising:
receiving (201), by a wireless access device, parameter information from a network side;
performing updating (203), by the wireless access device, according to the parameter information, and remeasuring the platform integrity after the updating to obtain a new platform integrity metric;
sending (205), by the wireless access device, the new platform integrity metric to the network side, so that the network side verifies the platform integrity by comparing a platform integrity metric, which is expected to be achieved after the updating and calculated according to the parameter information, with the new platform integrity metric to determine whether the updating is successful.

2. The method of platform integrity verification according to claim 1, wherein the parameter information comprises software information, and the performing the updating according to the parameter information, and remeasuring the platform integrity after the updating to obtain the new platform integrity metric comprises:
updating software according to the software information, and remeasuring the platform integrity after the software updating to obtain the new platform integrity metric.

3. The method of platform integrity verification according to claim 1, wherein the parameter information comprises configuration information, and the performing the updating according to the parameter information, and remeasuring the platform integrity after the updating to obtain the new platform integrity metric comprises:
updating configuration according to configuration data in the configuration information, and remeasuring the platform integrity after the configuration updating to obtain the new platform integrity metric.

4. The method of platform integrity verification according to claim 2, wherein the software information comprises a signed software package or abstract of the software package, and before the performing the software updating according to the software information, the method further comprises:
verifying whether a source of the software to be updated is legal according to the signed software package or the abstract of the software package, and if legal, performing the software updating.

5. The method of platform integrity verification according to claim 1, wherein before the performing updating according to the parameter information, and remeasuring the platform integrity after the updating to obtain the new platform integrity metric, the method further comprises:
calculating, by the network side, the platform integrity metric expected to achieve after the updating according to the platform integrity metric before the updating and the parameter information; and
wherein after comparing the platform integrity metric expected to achieve with the new platform integrity metric to determine whether the updating is successful, the method further comprises:
updating, by the network side, a local platform integrity metric if the updating is successful.

6. A method of platform integrity verification, comprising:
calculating (101), by a network side, a platform integrity Reference Integrity Metric, RIM, after a wireless access device is updated according to parameter information;
sending (103), by the network side, the parameter information to the wireless access device;
receiving (105), by the network side, a new platform integrity metric obtained according to the parameter information from the wireless access device; and
comparing (107), by the network side, the platform integrity RIM obtained after the wireless access device is updated according to the parameter information with the new platform integrity metric to determine the integrity status of the platform after the update.

7. The method of platform integrity verification according to claim 6, wherein before the calculating, by the network side, the platform integrity RIM after the wireless access device is updated, the method further comprises:
sending, by the network side, request information of a platform integrity metric to the wireless access device;
receiving, by the network side, the platform integrity metric from the wireless access device; and
comparing, by the network side, the platform integrity metric with a locally saved platform integrity RIM to determine the integrity status of the platform.

8. The method of platform integrity verification according to claim 6, wherein the calculating, by the network side, a platform integrity RIM after a wireless access device is updated comprises:
calculating the platform integrity RIM after the update according to a platform integrity RIM and the parameter information.

9. The method of platform integrity verification according to claim 8, wherein the parameter information comprises software information and configuration information, and the calculating the platform integrity RIM after the update according to a platform integrity RIM and the parameter information comprises:
calculating a platform integrity RIM after software is updated according to the platform integrity RIM and an integrity RIM related to the software contained in the software information; or
calculating a platform integrity RIM after the configuration is updated according to the platform integrity RIM and a new integrity RIM related to the configuration data contained in the configuration information.

10. The method of platform integrity verification according to any one of claims 6 to 9,
wherein after comparing the platform integrity RIM obtained after the wireless access device is updated with the new platform integrity metric to determine the integrity status of the platform after the update, the method further comprises:
updating a local platform integrity RIM if the platform status after the updating is integral.

11. A wireless access device, comprising:
a receiving unit (21), adapted to receive parameter information from a network side;
an obtaining unit (22), adapted to perform updating according to the parameter information, and remeasure platform integrity after the updating to obtain a new platform integrity metric; and
a sending unit (23), adapted to send the new platform integrity metric to the network side, so that the network side verifies the platform integrity by comparing a platform integrity metric, which is expected to be achieved after the updating and calculated according to the parameter information, with the new platform integrity metric to determine whether the updating is successful.

12. The wireless access device according to claim 11, wherein, the parameter information comprises software information or configuration information, and the obtaining unit comprises:
a first obtaining unit (221), adapted to update software according to the software information, and remeasure the platform integrity after the updating to obtain the new platform integrity metric; and
a second obtaining unit (222), adapted to update configuration according to configuration data in the configuration information, and remeasure the platform integrity after the updating to obtain the new platform integrity metric.

13. The wireless access device according to claim 11, further comprising:
a verifying unit (24), adapted to verify whether a source of the software to be updated received by the receiving unit is legal according to a signed software package or abstract of the software package comprised in the software information, and if legal, send the software information to the first obtaining unit.

14. The wireless access device according to claim 13, further comprising:
an authenticating unit (25), adapted to calculate a platform integrity metric expected to achieve after software updating according to the platform integrity metric of the platform integrity before the updating and the parameter information, and compare the platform integrity metric expected to achieve with the new platform integrity metric obtained by the obtaining unit to determine whether the updating is successful; and
an information sending unit (26), adapted to send unsuccessful updating information to a management server when the updating is unsuccessful.

15. A network device, comprising:
a calculating unit (11), adapted to calculate a platform integrity Reference Integrity Metric, RIM, after a wireless access device is updated according to parameter information;
a sending unit (12), adapted to send the parameter information to the wireless access device;
a receiving unit (13), adapted to receive a new platform integrity metric obtained according to the parameter information from the wireless access device; and
a verifying unit (14), adapted to compare the platform integrity RIM obtained after the wireless access device is updated according to the parameter information with the new platform integrity metric to determine the integrity status of the platform after the update.

16. The network device according to claim 15, further comprising:
a checking unit (15), adapted to send request information of a platform integrity metric to the wireless access device, receive the platform integrity metric from the wireless access device, and compare the platform integrity metric with a locally saved platform integrity RIM to determine the integrity status of the platform, wherein if the platform status is integral, the checking unit sends information to the calculating unit.

17. The network device according to claim 16, wherein the parameter information comprises software information and configuration information, and the calculating unit comprises:
a first calculating unit (111), adapted to calculate, after receiving the information from the checking unit, a platform integrity RIM after software is updated according to the platform integrity RIM and an integrity RIM related to the software comprised in the software information, and send the platform integrity RIM after the software is updated to the authenticating unit; and
a second calculating unit (112), adapted to calculate, after receiving the information from the checking unit, a platform integrity RIM after the configuration is updated according to the platform integrity RIM and a new integrity RIM related to the configuration data contained in the configuration information, and send the platform integrity RIM after the configuration is updated to the verifying unit.

18. The network device according to any one of claims 15 to 17, further comprising:
an updating unit (17), adapted to update a local platform integrity RIM when the platform status is integral after the verifying unit is updated.

19. A system for authenticating platform integrity, **characterized by** comprising a network device according to any one of claims 15 to 18 and a wireless access device according to any one of claims 11 to 14.

## Patentansprüche

1. Verfahren zur Plattformintegritätsverifikation, das Folgendes umfasst:
Empfangen (201) durch eine drahtlose Zugangsvorrichtung von Parameterinformationen von einer Netzseite;
Ausführen einer Aktualisierung (203) durch die drahtlose Zugangsvorrichtung gemäß den Parameterinformationen und erneutes Messen der Plattformintegrität nach dem Aktualisieren, um eine neue Plattformintegritätsmetrik zu erhalten;
Senden (205) durch die drahtlose Zugangsvorrichtung der neuen Plattformintegritätsmetrik zu der Netzseite, so dass die Netzseite die Plattformintegrität durch Vergleichen einer Plattformintegritätsmetrik, die zu erhalten nach dem Aktualisieren erwartet wird und die gemäß den Parameterinformationen berechnet wird, mit der neuen Plattformintegritätsmetrik, verifiziert, um zu bestimmen, ob das Aktualisieren erfolgreich ist.

2. Verfahren zur Plattformintegritätsverifikation nach Anspruch 1, wobei die Parameterinformationen Softwareinformationen umfassen und das Ausführen des Aktualisierens gemäß den Parameterinformationen und das erneute Messen der Plattformintegrität nach dem Aktualisieren, um die neue Plattformintegritätsmetrik zu erhalten, Folgendes umfasst:
Aktualisieren der Software gemäß den Softwareinformationen und erneutes Messen der Plattformintegrität nach dem Aktualisieren der Software, um die neue Plattformintegritätsmetrik zu erhalten.

3. Verfahren zur Plattformintegritätsverifikation nach Anspruch 1, wobei die Parameterinformationen Konfigurationsinformationen umfassen und das Ausführen des Aktualisierens gemäß den Parameterinformationen und das erneute Messen der Plattformintegrität nach dem Aktualisieren, um die neue Plattformintegritätsmetrik zu erhalten, Folgendes umfasst:
Aktualisieren der Konfiguration gemäß Konfigurationsdaten in den Konfigurationsinformationen und erneutes Messen der Plattformintegrität nach dem Aktualisieren der Konfiguration, um die neue Plattformintegritätsmetrik zu erhalten.

4. Verfahren zur Plattformintegritätsverifikation nach Anspruch 2, wobei die Softwareinformationen ein signiertes Softwarepaket oder eine Zusammenfassung des Softwarepakets umfassen und wobei das Verfahren vor dem Ausführen des Aktualisierens der Software gemäß den Softwareinformationen ferner Folgendes umfasst:
Verifizieren, ob eine Quelle der zu aktualisierenden Software legal ist, gemäß dem signierten Softwarepaket oder der Zusammenfassung des Softwarepakets, und falls sie legal ist, Ausführen des Aktualisierens der Software.

5. Verfahren zur Plattformintegritätsverifikation nach Anspruch 1, wobei vor dem Ausführen des Aktualisierens der Software gemäß den Parameterinformationen und dem erneuten Messen der Plattformintegrität nach dem Aktualisieren, um die neue Plattformintegritätsmetrik zu erhalten, das Verfahren ferner Folgendes umfasst:
Berechnen durch die Netzseite der Plattformintegritätsmetrik, die nach dem Aktualisieren gemäß der Plattformintegritätsmetrik vor dem Aktualisieren und den Parameterinformationen zu erhalten erwartet wird; und
wobei das Verfahren nach dem Vergleichen der Plattformintegritätsmetrik, die zu erhalten erwartet wird, mit der neuen Plattformintegritätsmetrik, um zu bestimmen,
ob die Aktualisierung erfolgreich ist, ferner Folgendes umfasst:
Aktualisieren durch die Netzseite einer lokalen Plattformintegritätsmetrik, wenn das Aktualisieren erfolgreich ist.

6. Verfahren zur Plattformintegritätsverifikation, das Folgendes umfasst:
Berechnen (101) durch eine Netzseite einer Plattformintegritäts-Referenzintegritätsmetrik, Plattformintegritäts-RIM, nach der Aktualisierung einer drahtlosen Zugangsvorrichtung gemäß den Parameterinformationen;
Senden (103) durch die Netzseite der Parameterinformationen zu der drahtlosen Zugangsvorrichtung;
Empfangen (105) durch die Netzseite einer neuen Plattformintegritätsmetrik, die gemäß den Parameterinformationen erhalten worden ist, von der drahtlosen Zugangsvorrichtung; und
Vergleichen (107) durch die Netzseite der Plattformintegritäts-RIM, die erhalten wird, nachdem die drahtlose Zugangsvorrichtung gemäß den Parameterinformationen aktualisiert worden ist, mit der neuen Plattformintegritätsmetrik, um den Integritätszustand der Plattform nach dem Aktualisieren zu bestimmen.

7. Verfahren zur Plattformintegritätsverifikation nach Anspruch 6, wobei vor dem Berechnen der Plattformintegritäts-RIM nach der Aktualisierung der drahtlosen Zugangsvorrichtung durch die Netzseite das Verfahren ferner Folgendes umfasst:
Senden durch die Netzseite von Anforderungsinformationen einer Plattformintegritätsmetrik zu der drahtlosen Zugangsvorrichtung;
Empfangen durch die Netzseite der Plattformintegritätsmetrik von der drahtlosen Zugangsvorrichtung; und
Vergleichen durch die Netzseite der Plattformintegritätsmetrik mit einer lokal gesicherten Plattformintegritäts-RIM, um den Integritätszustand der Plattform zu bestimmen.

8. Verfahren zur Plattformintegritätsverifikation nach Anspruch 6, wobei das Berechnen durch die Netzseite einer Plattformintegritäts-RIM nach der Aktualisierung einer drahtlosen Zugangsvorrichtung Folgendes umfasst:
Berechnen der Plattformintegritäts-RIM nach der Aktualisierung gemäß einer Plattformintegritäts-RIM und den Parameterinformationen.

9. Verfahren zur Plattformintegritätsverifikation nach Anspruch 8, wobei die Parameterinformationen Softwareinformationen und Konfigurationsinformationen umfassen und das Berechnen der Plattformintegritäts-RIM nach der Aktualisierung gemäß einer Plattformintegritäts-RIM und den Parameterinformationen Folgendes umfasst:
Berechnen einer Plattformintegritäts-RIM nach der Aktualisierung der Software gemäß der Plattformintegritäts-RIM und einer Integritäts-RIM, die sich auf die Software bezieht und die in den Softwareinformationen enthalten ist; oder
Berechnen einer Plattformintegritäts-RIM nach der Aktualisierung der Konfiguration gemäß der Plattformintegritäts-RIM und einer neuen Integritäts-RIM, die sich auf die in den Konfigurationsinformationen enthaltenen Konfigurationsdaten bezieht.

10. Verfahren zur Plattformintegritätsverifikation nach einem der Ansprüche 6 bis 9, wobei nach Vergleichen der Plattformintegritäts-RIM, die erhalten wird, nachdem die drahtlose Zugangsvorrichtung aktualisiert worden ist, mit der neuen Plattformintegritätsmetrik, um den Integritätszustand der Plattform nach der Aktualisierung zu bestimmen, das Verfahren ferner Folgendes umfasst:
Aktualisieren einer lokalen Plattformintegritäts-RIM, wenn der Plattformzustand nach dem Aktualisieren Integrität hat.

11. Drahtlose Zugangsvorrichtung, die Folgendes umfasst:
eine Empfangseinheit (21), die ausgelegt ist, Parameterinformationen von einer Netzseite zu empfangen;
eine Erhalteeinheit (22), die ausgelegt ist, das Aktualisieren gemäß den Parameterinformationen und erneutes Messen der Plattformintegrität nach dem Aktualisieren auszuführen, um eine neuen Plattformintegritätsmetrik zu erhalten; und
eine Sendeeinheit (23), die ausgelegt ist, die neue Plattformintegritätsmetrik zu der Netzseite zu senden, so dass die Netzseite die Plattformintegrität durch Vergleichen einer Plattformintegritätsmetrik, die nach dem Aktualisieren zu erhalten erwartet wird und die gemäß den Parameterinformationen berechnet wird, mit der neuen Plattformintegritätsmetrik verifiziert, um zu bestimmen, ob das Aktualisieren erfolgreich ist.

12. Drahtlose Zugangsvorrichtung nach Anspruch 11, wobei die Parameterinformationen Softwareinformationen oder Konfigurationsinformationen umfassen und die Erhalteeinheit Folgendes umfasst:
eine erste Erhalteeinheit (221), die ausgelegt ist, Software gemäß den Softwareinformationen zu aktualisieren und die Plattformintegrität nach dem Aktualisieren erneut zu messen, um die neue Plattformintegritätsmetrik zu erhalten;
und
eine zweite Erhalteeinheit (222), die ausgelegt ist, Konfiguration gemäß Konfigurationsdaten in den Konfigurationsinformationen zu aktualisieren und die Plattformintegrität nach dem Aktualisieren erneut zu messen, um die neue Plattformintegritätsmetrik zu erhalten.

13. Drahtlose Zugangsvorrichtung nach Anspruch 11, die ferner Folgendes umfasst:
eine Verifikationseinheit (24), die ausgelegt ist zu verifizieren, ob eine Quelle der zu aktualisierenden Software, die von der Empfangseinheit empfangen wurde, gemäß einem signierten Softwarepaket oder einer Zusammenfassung des Softwarepakets,
die in den Softwareinformationen enthalten ist, legal ist, und dann, wenn sie legal ist,
die Softwareinformationen zu der ersten Erhalteeinheit zu senden.

14. Drahtlose Zugangsvorrichtung nach Anspruch 13, die ferner Folgendes umfasst:
eine Authentifizierungseinheit (25), die ausgelegt ist, eine Plattformintegritätsmetrik,
die nach dem Aktualisieren der Software zu erhalten erwartet wird, gemäß der Plattformintegritätsmetrik der Plattformintegrität vor dem Aktualisieren und den Parameterinformationen zu berechnen und die Plattformintegritätsmetrik, die zu erhalten erwartet wird, mit der neuen Plattformintegritätsmetrik, die durch die Erhalteeinheit erhalten wird, zu vergleichen, um zu bestimmen, ob das Aktualisieren erfolgreich ist; und
eine Informationssendeeinheit (26), die ausgelegt ist, Informationen über nicht erfolgreiches Aktualisieren zu einem Management-Server zu senden, wenn die Aktualisierung nicht erfolgreich ist.

15. Netzvorrichtung, die Folgendes umfasst:
eine Berechnungseinheit (11), die ausgelegt ist, eine Plattformintegritäts-Referenzintegritätsmetrik, Plattformintegritäts-RIM, nach der Aktualisierung einer drahtlosen Zugangsvorrichtung gemäß den Parameterinformationen zu berechnen;
eine Sendeeinheit (12), die ausgelegt ist, Parameterinformationen zu der drahtlosen Zugangsvorrichtung zu senden;
eine Empfangseinheit (13), die ausgelegt ist, eine neue Plattformintegritätsmetrik, die gemäß den Parameterinformationen erhalten wird, von der drahtlosen Zugangsvorrichtung zu empfangen; und
eine Verifikationseinheit (14), die ausgelegt ist, die Plattformintegritäts-RIM, die erhalten wird, nachdem die drahtlose Zugangsvorrichtung gemäß den Parameterinformationen aktualisiert worden ist, mit der neuen Plattformintegritätsmetrik zu vergleichen, um den Integritätszustand der Plattform nach dem Aktualisieren zu bestimmen.

16. Netzvorrichtung nach Anspruch 15, die ferner Folgendes umfasst:
eine Prüfeinheit (15), die ausgelegt ist, Anforderungsinformationen für eine Plattformintegritätsmetrik zu der drahtlosen Zugangsvorrichtung zu senden, die Plattformintegritätsmetrik von der drahtlosen Zugangsvorrichtung zu empfangen und
die Plattformintegritätsmetrik mit einer lokal gesicherten Plattformintegritäts-RIM zu vergleichen, um den Integritätszustand der Plattform zu bestimmen, wobei die Prüfeinheit dann, wenn der Plattformzustand Integrität hat, Informationen zu der Berechnungseinheit sendet.

17. Netzvorrichtung nach Anspruch 16, wobei die Parameterinformationen Softwareinformationen und Konfigurationsinformationen umfassen und die Berechnungseinheit Folgendes umfasst:
eine erste Berechnungseinheit (111), die ausgelegt ist, nach dem Empfangen der Informationen von der Prüfeinheit eine Plattformintegritäts-RIM nach der Aktualisierung der Software gemäß der Plattformintegritäts-RIM und einer Integritäts-RIM, die sich auf die Software bezieht und die in den Softwareinformationen enthalten ist, zu berechnen und die Plattformintegritäts-RIM nach der Aktualisierung der Software zu der Authentifizierungseinheit zu senden;
und
eine zweite Berechnungseinheit (112), die ausgelegt ist, nach dem Empfangen der Informationen von der Prüfeinheit, eine Plattformintegritäts-RIM nach der Aktualisierung der Konfiguration gemäß der Plattformintegritäts-RIM und einer neuen Integritäts-RIM, die sich auf die in den Konfigurationsinformationen enthaltenen Konfigurationsdaten bezieht, zu berechnen, und die Plattformintegritäts-RIM nach der Aktualisierung der Konfiguration zu der Verifikationseinheit zu senden.

18. Netzvorrichtung nach einem der Ansprüche 15 bis 17, die ferner Folgendes umfasst:
eine Aktualisierungseinheit (17), die ausgelegt ist, eine lokale Plattformintegritäts-RIM zu aktualisieren, wenn der Plattformzustand Integrität hat, nachdem die Verifikationseinheit aktualisiert worden ist.

19. System zum Authentifizieren der Plattformintegrität, **dadurch gekennzeichnet, dass** das System eine Netzvorrichtung nach einem der Ansprüche 15 bis 18 und eine drahtlose Zugangsvorrichtung nach einem der Ansprüche 11 bis 14 umfasst.

## Revendications

1. Procédé de vérification d'intégrité de plate-forme comprenant les étapes suivantes :
recevoir (201), par un dispositif d'accès sans fil, des informations de paramètres depuis un côté réseau ;
effectuer une mise à jour (203), par le dispositif d'accès sans fil, conformément aux informations de paramètres, et remesurer l'intégrité de plate-forme, après la mise à jour, pour obtenir une nouvelle mesure de l'intégrité de plate-forme ;
envoyer (205), par le dispositif d'accès sans fil, la nouvelle mesure d'intégrité de plate-forme au côté réseau, de manière à ce que le côté réseau vérifie l'intégrité de plate-forme en comparant une mesure d'intégrité de plate-forme, laquelle est attendue après la mise à jour et calculée conformément aux informations de paramètres, à la nouvelle mesure d'intégrité de plate-forme pour déterminer si la mise à jour est réussie.

2. Procédé de vérification d'intégrité de plate-forme selon la revendication 1, dans lequel les informations de paramètres comprennent des informations logicielles, et effectuer la mise à jour conformément aux informations de paramètres et remesurer l'intégrité de plate-forme après la mise à jour pour obtenir la nouvelle mesure d'intégrité de plate-forme comprennent l'étape suivante :
mettre à jour le logiciel conformément aux informations logicielles et remesurer l'intégrité de plate-forme après la mise à jour logicielle pour obtenir la nouvelle mesure d'intégrité de plate-forme.

3. Procédé de vérification d'intégrité de plate-forme selon la revendication 1, dans lequel les informations de paramètres comprennent des informations de configuration, et effectuer la mise à jour conformément aux informations de paramètres et remesurer l'intégrité de plate-forme après la mise à jour pour obtenir la nouvelle mesure d'intégrité de plate-forme comprennent l'étape suivante :
mettre à jour la configuration conformément à des données de configuration dans les informations de configuration et remesurer l'intégrité de plate-forme après la mise à jour de la configuration pour obtenir la nouvelle mesure d'intégrité de plate-forme.

4. Procédé de vérification d'intégrité de plate-forme selon la revendication 2, dans lequel les informations logicielles comprennent un progiciel signé ou un résumé du progiciel, et avant d'effectuer la mise à jour logicielle conformément aux informations logicielles, le procédé comprend en outre l'étape suivante :
vérifier si une source du logiciel à mettre à jour est légale conformément au progiciel signé ou au résumé du progiciel et, si elle est légale, effectuer la mise à jour logicielle.

5. Procédé de vérification d'intégrité de plate-forme selon la revendication 1, dans lequel, avant d'effectuer la mise à jour conformément aux informations logicielles, et de remesurer l'intégrité de plate-forme après la mise à jour pour obtenir la nouvelle mesure d'intégrité de plate-forme, le procédé comprend en outre les étapes suivantes :
calculer, par le côté réseau, la mesure d'intégrité de plate-forme attendue après la mise à jour conformément à la mesure d'intégrité de plate-forme avant la mise à jour et les informations de paramètres ; et
mettre à jour, par le côté réseau, une mesure d'intégrité de plate-forme locale si la mise à jour est réussie.

6. Procédé de vérification d'intégrité de plate-forme, comprenant les étapes suivantes :
calculer (101), par un côté réseau, une mesure d'intégrité de référence d'intégrité de plate-forme, RIM, après qu'un dispositif d'accès sans fil a été mis à jour conformément à des informations de paramètres ;
envoyer (103), par le côté réseau, les informations de paramètres au dispositif d'accès sans fil ;
recevoir (105), par le côté réseau, une nouvelle mesure d'intégrité de plate-forme obtenue conformément aux informations de paramètres provenant du dispositif d'accès sans fil ; et
comparer (107), par le côté réseau, la RIM d'intégrité de plate-forme obtenue après que le dispositif d'accès sans fil a été mis à jour conformément aux informations de paramètres, à la nouvelle mesure d'intégrité de plate-forme pour déterminer l'état d'intégrité de la plate-forme après la mise à jour.

7. Procédé de vérification d'intégrité de plate-forme selon la revendication 6, dans lequel, avant d'avoir calculé, par le côté réseau, la RIM d'intégrité de plate-forme après que le dispositif d'accès sans fil a été mis à jour, le procédé comprend en outre les étapes suivantes :
envoyer, par le côté réseau, des informations de demande d'une mesure d'intégrité de plate-forme au dispositif d'accès sans fil ;
recevoir, par le côté réseau, la mesure d'intégrité de plate-forme à partir du dispositif d'accès sans fil ; et
comparer, par le côté réseau, la mesure d'intégrité de plate-forme à une RIM d'intégrité de plate-forme sauvegardée localement pour déterminer l'état d'intégrité de la plate-forme.

8. Procédé de vérification d'intégrité de plate-forme selon la revendication 6, dans lequel, calculer, par le côté réseau, une RIM d'intégrité de plate-forme après qu'un dispositif d'accès sans fil a été mis à jour, comprend l'étape suivante :
calculer la RIM d'intégrité de plate-forme après la mise à jour conformément à une RIM d'intégrité de plate-forme et aux informations de paramètres.

9. Procédé de vérification d'intégrité de plate-forme selon la revendication 8, dans lequel les informations de paramètres comprennent des informations logicielles et des informations de configuration, et calculer la RIM d'intégrité de plate-forme après la mise à jour conformément à une RIM d'intégrité de plate-forme et aux informations de paramètres comprend les étapes suivantes :
calculer une RIM d'intégrité de plate-forme après que le logiciel a été mis à jour conformément à la RIM d'intégrité de plate-forme et à une RIM d'intégrité relative au logiciel contenu dans les informations logicielles ; ou
calculer une RIM d'intégrité de plate-forme après que la configuration a été mise à jour conformément à la RIM d'intégrité de plate-forme et à une nouvelle RIM d'intégrité relative aux données de configuration contenues dans les informations de configuration.

10. Procédé de vérification d'intégrité de plate-forme selon l'une quelconque des revendications 6 à 9, dans lequel, après avoir comparé la RIM d'intégrité de plate-forme obtenue après que le dispositif d'accès sans fil a été mis à jour avec la nouvelle mesure d'intégrité de plate-forme pour déterminer l'état d'intégrité de la plate-forme après la mise à jour, le procédé comprend en outre l'étape suivante :
mettre à jour une RIM d'intégrité de plate-forme si l'état de plate-forme après la mise à jour est intégral.

11. Dispositif d'accès sans fil comprenant :
une unité de réception (21) conçue pour recevoir des informations de paramètres depuis un côté réseau ;
une unité d'obtention (22) conçue pour effectuer une mise à jour conformément aux informations de paramètres, et remesurer l'intégrité de plate-forme après la mise à jour pour obtenir une nouvelle mesure de l'intégrité de plate-forme ; et
une unité d'envoi (23) conçue pour envoyer la nouvelle mesure d'intégrité de plate-forme au côté réseau, de manière à ce que le côté réseau vérifie l'intégrité de plate-forme en comparant une mesure d'intégrité de plate-forme, laquelle est attendue après la mise à jour et calculée conformément aux informations de paramètres, à la nouvelle mesure d'intégrité de plate-forme pour déterminer si la mise à jour est réussie.

12. Dispositif d'accès sans fil selon la revendication 11, dans lequel les informations de paramètres comprennent des informations logicielles ou des informations de configuration, et l'unité d'obtention comprend :
une première unité d'obtention (221), conçue pour mettre à jour le logiciel conformément aux informations logicielles et pour mesurer l'intégrité de plate-forme après la mise à jour pour obtenir la nouvelle mesure d'intégrité de plate-forme ; et
une seconde unité d'obtention (222), conçue pour mettre à jour la configuration conformément à des données de configuration dans les informations de configuration, et pour remesurer l'intégrité de plate-forme après la mise à jour pour obtenir la nouvelle mesure d'intégrité de plate-forme.

13. Dispositif d'accès sans fil selon la revendication 11, comprenant en outre :
une unité de vérification (24), conçue pour vérifier si une source du logiciel à mettre à jour reçue par l'unité de réception est légale conformément à un progiciel signé ou
à un résumé du progiciel compris dans les informations logicielles et, si elle est légale, envoyer les informations logicielles à la première unité d'obtention.

14. Dispositif d'accès sans fil selon la revendication 13, comprenant en outre :
une unité d'authentification (25), conçue pour calculer une mesure d'intégrité de plate-forme attendue après la mise à jour logicielle conformément à la mesure d'intégrité de plate-forme de l'intégrité de plate-forme avant la mise à jour et aux informations de paramètres, et pour comparer la mesure d'intégrité de plate-forme attendue à la nouvelle mesure d'intégrité de plate-forme obtenue par l'unité d'obtention pour déterminer si la mise à jour est réussie ; et
une unité d'envoi d'informations (26), conçue pour envoyer des informations d'échec de mise à jour à un serveur de gestion lorsque la mise à jour échoue.

15. Dispositif réseau comprenant :
une unité de calcul (11), conçue pour calculer une mesure d'intégrité de référence, RIM, d'intégrité de plate-forme après qu'un dispositif d'accès sans fil a été mis à jour conformément à des informations de paramètres ;
une unité d'envoi (12), conçue pour envoyer les informations de paramètres au dispositif d'accès sans fil ;
une unité de réception (13), conçue pour recevoir une nouvelle mesure d'intégrité de plate-forme obtenue conformément aux informations de paramètres provenant du dispositif d'accès sans fil ; et
une unité de vérification (14), conçue pour comparer la RIM d'intégrité de plate-forme obtenue après que le dispositif d'accès sans fil a été mis à jour conformément aux informations de paramètres avec la nouvelle mesure d'intégrité de plate-forme pour déterminer l'état d'intégrité de la plate-forme après la mise à jour.

16. Dispositif de réseau selon la revendication 15, comprenant en outre :
une unité de vérification (15), conçue pour envoyer des informations de demande d'une mesure d'intégrité de plate-forme au dispositif d'accès sans fil, pour recevoir la mesure d'intégrité de plate-forme du dispositif d'accès sans fil, et pour comparer la mesure d'intégrité de plate-forme à une RIM d'intégrité de plate-forme sauvegardée localement pour déterminer l'état d'intégrité de la plate-forme, où si l'état d'intégrité est intégral, l'unité de vérification envoie des informations à l'unité de calcul.

17. Dispositif de réseau selon la revendication 16, dans lequel les informations de paramètres comprennent des informations logicielles et des informations de configuration, et l'unité de calcul comprend :
une première unité de calcul (111), conçue pour calculer, après réception des informations depuis l'unité de vérification, une RIM d'intégrité de plate-forme après que le logiciel a été mis à jour conformément à la RIM d'intégrité de plate-forme et à une RIM d'intégrité relative au logiciel contenu dans les informations logicielles, et
pour envoyer la RIM d'intégrité de plate-forme, après que le logiciel a été mis à jour,
à l'unité d'authentification ; et
une seconde unité de calcul (112), conçue pour calculer, après réception des informations depuis l'unité de vérification, une RIM d'intégrité de plate-forme après que la configuration a été mise à jour conformément à la RIM d'intégrité de plate-forme et à une nouvelle RIM d'intégrité relative aux données de configuration contenues dans les informations de configuration, et pour envoyer la RIM d'intégrité de plate-forme, après que la configuration a été mise à jour, à l'unité de vérification.

18. Dispositif de réseau selon l'une quelconque des revendications 15 à 17, comprenant en outre :
une unité de mise à jour (17), conçue pour mettre à jour une RIM d'intégrité de plate-forme locale lorsque l'état de la plate-forme est intégral après que l'unité de vérification a été mise à jour.

19. Système pour authentifier l'intégrité d'une plate-forme, **caractérisé en ce qu'**il comprend un dispositif réseau selon l'une quelconque des revendications 15 à 18 et un dispositif d'accès sans fil selon l'une quelconque des revendications 11 à 14.
